# EUROPEAN PATENT SPECIFICATION

(11) **EP 2 900 995 B1**
(45) Date of publication and mention of the grant of the patent: **13.11.2019**
(21) Application number: 13841553.4
(22) Date of filing: 01.03.2013
(51) Int. Cl.: F02K 1/10, F02K 1/06, F02K 9/86, F02K 1/34, F02C 3/107, F02C 7/36, F02K 1/82, F02K 3/06, F02C 7/24

(54) **GEARED GAS TURBINE ENGINE INTEGRATED WITH A VARIABLE AREA FAN NOZZLE WITH REDUCED NOISE**
GETRIEBETURBOFANTRIEBWERK MIT INTEGRIERTER VARIABLER NEBENSTROMDÜSE MIT VERRINGERTEM LÄRM
MOTEUR À TURBINE À GAZ À ENGRENAGES AVEC UNE TUYÈRE INTÉGRÉE À SECTION VARIABLE POUR RÉDUIRE LE BRUIT

(30) Priority: 27.09.2012 US 201261706324 P
(43) Date of publication of application: 05.08.2015
(73) Proprietor: United Technologies Corporation, Farmington, CT 06032 (US)
(72) Inventor: BALTAS, Constantine, Manchester, Connecticut 06040 (US)
(74) Representative: Dehns
(86) International application number: PCT/US2013/028526
(87) International publication number: WO 2014/051671

(56) References cited:
- EP-A2- 0 895 222
- US-A- 4 817 756
- US-A- 4 969 535
- US-A- 5 706 651
- US-A- 5 806 302
- US-A1- 2005 060 982
- US-A1- 2009 277 155
- US-A1- 2009 320 488
- US-A1- 2012 023 901
- Willy J. G. Bräunling ET AL: "Flugzeugtriebwerke : Grundlagen, Aero-Thermodynamik, ideale und reale Kreisprozesse, Thermische Turbomaschinen, Komponenten, Emissionen und Systeme" In: "Flugzeugtriebwerke : Grundlagen, Aero-Thermodynamik, ideale und reale Kreisprozesse, Thermische Turbomaschinen, Komponenten, Emissionen und Systeme", 1 December 2009 (2009-12-01), Springer, XP055437076, pages 1309-1314,

## Description

### BACKGROUND

A gas turbine engine typically includes a fan section, a compressor section, a combustor section and a turbine section. Air entering the compressor section is compressed and delivered into the combustion section where it is mixed with fuel and ignited to generate a high-speed exhaust gas flow. The high-speed exhaust gas flow expands through the turbine section to drive the compressor and the fan section. The compressor section typically includes low and high pressure compressors, and the turbine section includes low and high pressure turbines.

The high pressure turbine drives the high pressure compressor through an outer shaft to form a high spool, and the low pressure turbine drives the low pressure compressor through an inner shaft to form a low spool. The fan section may also be driven by the low inner shaft. A direct drive gas turbine engine includes a fan section driven by the low spool such that the low pressure compressor, low pressure turbine and fan section rotate at a common speed in a common direction.

A speed reduction device such as an epicyclical gear assembly may be utilized to drive the fan section such that the fan section may rotate at a speed different than the turbine section so as to increase the overall propulsive efficiency of the engine. In such engine architectures, a shaft driven by one of the turbine sections provides an input to the epicyclical gear assembly that drives the fan section at a reduced speed such that both the turbine section and the fan section can rotate at closer to optimal speeds.

Turbine engine manufacturers continue to seek further improvements to engine performance and reductions in noise.

A gas turbine engine having the features of the preamble of claim 1 is disclosed in US 2012/023901 A1. A gas turbine engine having an acoustic treatment of a movable nozzle is disclosed in US 5806302 A. A gas turbine engine with a movable nozzle is disclosed in US 2009/0277155 A1.

### SUMMARY

The present invention provide a gas turbine engine as set forth in claim 1.

In a non-limiting embodiment of the foregoing example, the acoustic liner is perforated.

In a further non-limiting embodiment of any of the foregoing examples, the acoustic liner includes a honeycomb between two face sheets, and one of the face sheets that faces into a bypass flow path of the fan nozzle is perforated.

In a non-limiting embodiment of the foregoing example, the fan has a design pressure ratio of approximately 1.25-1.6.

### BRIEF DESCRIPTION OF THE DRAWINGS

The various features and advantages of the present disclosure will become apparent to those skilled in the art from the following detailed description. The drawings that accompany the detailed description can be briefly described as follows.
Figure 1 illustrates an example gas turbine engine.
Figure 2 illustrates selected portion of another example gas turbine engine.
Figure 3 illustrates an example perforated acoustic liner.

### DESCRIPTION

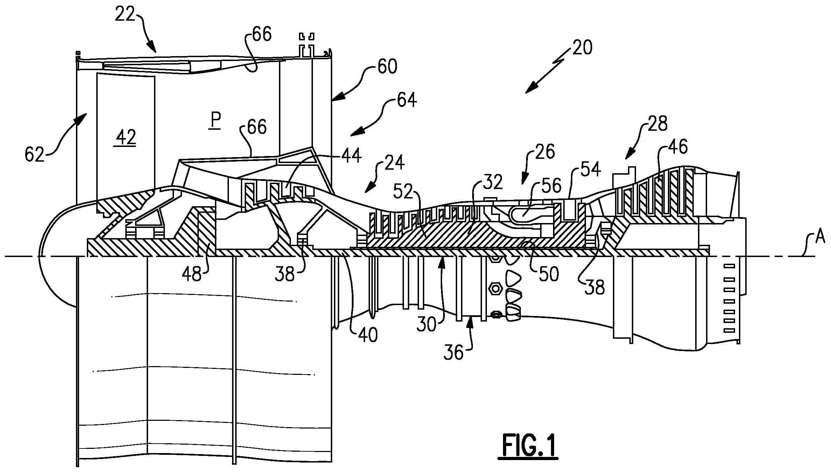

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The compressor section 24, combustor section 26 and turbine section 28 are part of a core engine that drives the fan section 22. Alternative engines might include an augmentor section (not shown) among other systems or features. The fan section 22 drives air along a bypass flow path P, also known as a fan bypass duct, while the compressor section 24 drives air along a core flow path for compression and communication into the combustor section 26 then expansion through the turbine section 28. Although depicted as a turbofan gas turbine engine in the disclosed non-limiting embodiment, it should be understood that the concepts described herein are not limited to use with turbofans as the teachings may be applied to other types of turbine engines, including single spool or three-spool architectures.

The engine 20 generally includes a first spool 30 and a second spool 32 mounted for rotation about an engine central axis A relative to an engine static structure 36 via several bearing systems 38. It should be understood that various bearing systems 38 at various locations may alternatively or additionally be provided.

The first spool 30 generally includes a first shaft 40 that interconnects a fan 42, a first compressor 44 and a first turbine 46. The first shaft 40 is connected to the fan 42 through a gear assembly of a fan drive gear system 48 to drive the fan 42 at a lower speed than the first spool 30. The second spool 32 includes a second shaft 50 that interconnects a second compressor 52 and second turbine 54. The first spool 30 runs at a relatively lower pressure than the second spool 32. It is to be understood that "low pressure" and "high pressure" or variations thereof as used herein are relative terms indicating that the high pressure is greater than the low pressure. An annular combustor 56 is arranged between the second compressor 52 and the second turbine 54. The first shaft 40 and the second shaft 50 are concentric and rotate via bearing systems 38 about the engine central axis A which is collinear with their longitudinal axes.

The core airflow is compressed by the first compressor 44 then the second compressor 52, mixed and burned with fuel in the annular combustor 56, then expanded over the second turbine 54 and first turbine 46. The first turbine 46 and the second turbine 54 rotationally drive, respectively, the first spool 30 and the second spool 32 in response to the expansion.

The engine 20 is a high-bypass geared aircraft engine that has a bypass ratio that is greater than about six (6), with an example embodiment being greater than ten (10), the gear assembly of the fan drive gear system 48 is an epicyclic gear train, such as a planetary gear system or other gear system, with a gear reduction ratio of greater than about 2.3:1 and the first turbine 46 has a pressure ratio that is greater than about five (5). The first turbine 46 pressure ratio is pressure measured prior to inlet of first turbine 46 as related to the pressure at the outlet of the first turbine 46 prior to an exhaust nozzle. The first turbine 46 has a maximum rotor diameter and the fan 42 has a fan diameter such that a ratio of the maximum rotor diameter divided by the fan diameter is less than 0.6. It should be understood, however, that the above parameters are only exemplary.

A significant amount of thrust is provided by the bypass flow B due to the high bypass ratio. The fan section 22 of the engine 20 is designed for a particular flight condition -- typically cruise at about 0.8 Mach and about 35,000 feet (10668 m). The flight condition of 0.8 Mach and 35,000 ft (10668 m), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5} (°R = (°C + 273.15) x 1.8). The "Low corrected fan tip speed" as disclosed herein according to one non-limiting embodiment is less than about 1150 ft / second (350.5 m/s).

The engine 20 includes a variable area fan nozzle 60 (hereafter "VAFN 60") that is operable to change an exit area of the fan bypass flow path P. For example, the VAFN 60 can include flaps that are moveable using one or more actuator mechanisms between open, closed and intermediate positions. As can be appreciated, other mechanisms or configurations can alternatively be used.

In one example, the engine 20 and fan 42 are configured to operate at a fan design pressure ratio of approximately 1.25-1.6, which generates relatively low fan noise and low jet noise. The use of the fan drive gear system 48 and VAFN 60 enables the noise reduction.

The design pressure ratio is with respect to an inlet pressure at an inlet 62 and an outlet pressure at an outlet 64 of the fan bypass flow path P. As an example, the design pressure ratio may be determined based upon the stagnation inlet pressure and the stagnation outlet pressure at a design rotational speed of the engine 20. The VAFN 60 is operative to change the exit area of the outlet 64 to thereby control the pressure ratio via changing pressure within the fan bypass flow path P. The design pressure ratio may be defined with the VAFN 60 fully open or fully closed.

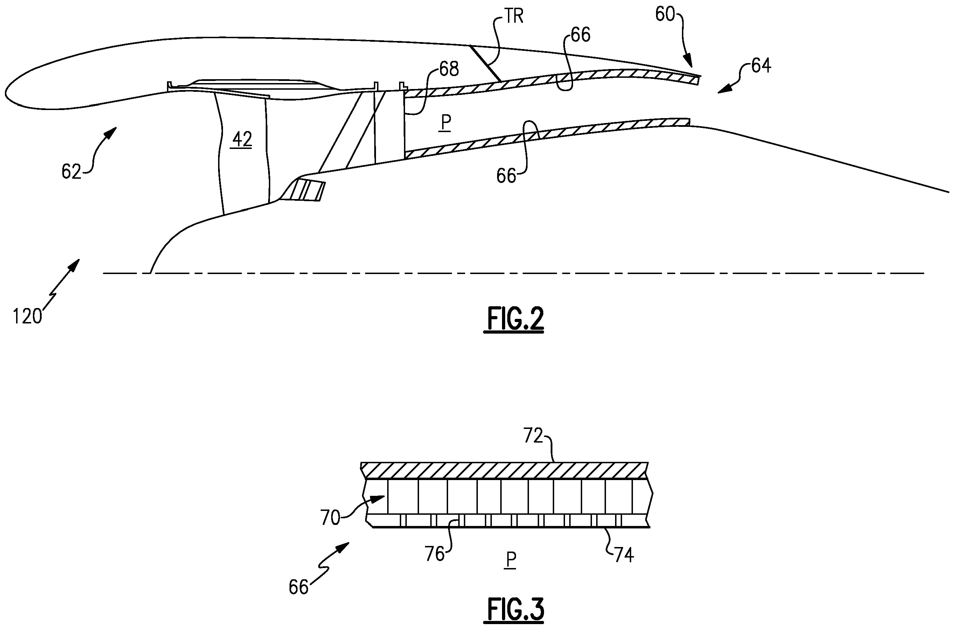

The reduction in noise generation reduces the need for acoustic attenuation. For example, Figure 2 illustrates another example engine 120 that is similar to the engine 20 of Figure 1. Figure 2 does not show the core engine sections, which are similar to the engine 20 of Figure 1 as described above.

The engine 120 includes an acoustic liner 66 located on an outer fixed area and inner fixed area of the fan bypass flow path P, to attenuate noise. The outer fixed area is an outer case/wall that bounds an outer diameter of the fan bypass flow path P and the inner fixed area is an inner case/wall or core cowl that bounds an inner diameter of the fan bypass flow path P.

In a further example, the acoustic liner 66 is located aft of engine exit guide vanes 68 and may or may not cover or partially cover areas of a thrust reverser, TR, in the fan bypass flow path P. In one example shown in Figure 3, the acoustic liner 66 is a perforated structure that includes a honeycomb 70 between two face sheets 72/74, where at least the face sheet 74 that bounds the fan bypass flow path P has perforations 76.

The reduction in noise by the use of the given pressure ratio, fan drive gear system 48 and VAFN 60 permits a reduction in the area covered by the acoustic liner 66. In one example, compared to a similar engine without the VAFN 60 and fan drive gear system 48, the engine 20 produces the same or less noise using 50% or less area of the acoustic liner 66.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures.

The preceding description is exemplary rather than limiting in nature. The scope of legal protection given to this disclosure can only be determined by studying the following claims.

## Claims

1. A gas turbine engine (120) comprising:
a spool (30);
a turbine (46) coupled to drive the spool (30);
a fan (42) coupled to be driven by the turbine (46) through the spool (30);
a gear assembly (48) coupled between the fan (42) and the spool (30) such that rotation of the spool (30) drives the fan at a different speed than the spool (30); and
a fan nozzle downstream from the fan, the fan nozzle including a variable area nozzle (60) configured to change an exit area of the fan nozzle;
the fan nozzle further comprising:
a fan bypass duct including an outer wall, an inner wall and a fan bypass flow path (P) there between, the fan bypass duct defining an exit area and being configured to adjust the exit area; and
an acoustic liner (66) partially lining the fan bypass duct;
wherein the acoustic liner (66) is located on an outer fixed area, and an inner fixed area of the fan bypass flow path (P), the inner fixed area being an inner wall or case or core cowl that bounds an inner diameter of the fan bypass flow path (P) and the outer fixed area being an outer wall or case that bounds an outer diameter of the fan bypass flow path (P);
**characterized in that** the acoustic liner (66) lines no greater than 50% of a surface area of the fan bypass flow path (P).

2. The gas turbine engine as recited in claim 1, wherein the acoustic liner (66) is perforated.

3. The gas turbine engine as recited in claim 1 or 2, wherein the acoustic liner (66) includes a honeycomb (70) between two face sheets (72, 74), and one of the face sheets (74) is perforated and faces into the fan bypass flow path (P).

## Patentansprüche

1. Gasturbinenmotor (120), umfassend:
eine Spule (30);
eine Turbine (46), die gekoppelt ist, um die Spule (30) anzutreiben;
ein Gebläse (42), das gekoppelt ist, um durch die Spule (30) von der Turbine (46) angetrieben zu werden;
eine Getriebebaugruppe (48), die zwischen dem Gebläse (42) und der Spule (30) gekoppelt ist, sodass Drehung der Spule (30) das Gebläse bei einer anderen Geschwindigkeit als die Spule (30) antreibt; und
eine Gebläsedüse stromabwärts des Gebläses, wobei die Gebläsedüse eine variable Bereichsdüse (60) beinhaltet, die konfiguriert ist, um einen Austrittsbereich der Gebläsedüse zu verändern;
wobei die Gebläsedüse ferner Folgendes umfasst:
einen Gebläseumgehungskanal, der eine Außenwand, eine Innenwand und einen Gebläseumgehungsströmungsweg (P) dazwischen beinhaltet, wobei der Gebläseumgehungskanal einen Austrittsbereich definiert und konfiguriert ist, um den Austrittsbereich einzustellen; und
eine akustische Auskleidung (66), die den Gebläseumgehungskanal teilweise auskleidet;
wobei sich die akustische Auskleidung (66) an einem äußeren festen Bereich und einem inneren festen Bereich des Gebläseumgehungsströmungsweges (P) befindet, wobei der innere feste Bereich eine Innenwand oder ein Innengehäuse oder eine Kernverkleidung ist, die/das einen Innendurchmesser des Gebläseumgehungsströmungsweges (P) begrenzt, und der äußere feste Bereich eine Außenwand oder ein Außengehäuse ist, die/das einen Außendurchmesser des Gebläseumgehungsströmungsweges (P) begrenzt;
**dadurch gekennzeichnet, dass** die akustische Auskleidung (66) nicht mehr als 50 % eines Oberflächenbereichs des Gebläseumgehungsströmungsweges (P) auskleidet.

2. Gasturbinenmotor nach Anspruch 1, wobei die akustische Auskleidung (66) perforiert ist.

3. Gasturbinenmotor nach Anspruch 1 oder 2, wobei die akustische Auskleidung (66) eine Wabe (70) zwischen zwei Decklagen (72, 74) beinhaltet und eine der Decklagen (74) perforiert ist und dem Gebläseumgehungsströmungsweg (P) zugewandt ist.

## Revendications

1. Moteur à turbine à gaz (120), comprenant :
une bobine (30) ;
une turbine (46) couplée pour entraîner la bobine (30) ;
un ventilateur (42) couplé pour être entraîné par la turbine (46) à travers la bobine (30) ;
un ensemble engrenage (48) couplé entre le ventilateur (42) et la bobine (30) de sorte que la rotation de la bobine (30) entraîne le ventilateur à une vitesse différente de celle de la bobine (30) ; et
une tuyère en aval du ventilateur, la tuyère comportant une tuyère à section variable (60) conçue pour modifier une section de sortie de la tuyère ;
la tuyère comprenant en outre :
un conduit de dérivation de ventilateur comportant une paroi externe, une paroi interne et un trajet d'écoulement de dérivation de ventilateur (P) entre celles-ci, le conduit de dérivation de ventilateur définissant une section de sortie et étant conçu pour ajuster la section de sortie ; et
un revêtement acoustique (66) recouvrant partiellement le conduit de dérivation de ventilateur ;
dans lequel le revêtement acoustique (66) est situé sur une section fixe externe et sur une section fixe interne du trajet d'écoulement de dérivation de ventilateur (P), la section fixe interne étant une paroi interne, un carter ou un capot central qui délimite un diamètre interne du trajet d'écoulement de dérivation de ventilateur (P) et la section fixe externe étant une paroi externe ou un carter qui délimite un diamètre externe du trajet d'écoulement de dérivation de ventilateur (P) ;
**caractérisé en ce que** le revêtement acoustique (66) ne représente pas plus de 50 % d'une section de surface du trajet d'écoulement de dérivation de ventilateur (P).

2. Moteur à turbine à gaz selon la revendication 1, dans lequel le revêtement acoustique (66) est perforé.

3. Moteur à turbine à gaz selon la revendication 1 ou 2, dans lequel le revêtement acoustique (66) comporte une structure alvéolaire (70) entre deux feuilles protectrices (72, 74), et l'une des feuilles protectrices (74) est perforée et fait face au trajet d'écoulement de dérivation de ventilateur (P).
